# FASCICULE DE BREVET EUROPEEN

(11) **EP 3 963 234 B1**
(45) Date de publication et mention de la délivrance du brevet: **19.04.2023**
(21) Numéro de dépôt: 20740368.4
(22) Date de dépôt: 02.06.2020
(51) Int. Cl.: F16H 25/20, F16D 65/18

(54) **RÉDUCTEUR ÉPICYCLOÏDAL COMPRENANT AU MOINS UNE PIÈCE DE TRANSMISSION D'EFFORT AXIAL FORMANT UN CHEMIN D'EFFORT RADIALEMENT EXCENTRÉ**
PLANETENUNTERSETZUNGSGETRIEBE MIT MINDESTENS EINEM AXIALEN KRAFTÜBERTRAGUNGSBAUTEIL, DAS EINEN RADIAL EXZENTRISCHEN KRAFTWEG BILDET
EPICYCLIC STEP-DOWN GEAR COMPRISING AT LEAST ONE AXIAL FORCE TRANSMISSION COMPONENT WHICH FORMS A RADIALLY ECCENTRIC FORCE PATH

(30) Priorité: 04.06.2019 FR 1905918
(43) Date de publication de la demande: 09.03.2022
(73) Titulaire: Hitachi Astemo France, 93700 Drancy (FR)
(72) Inventeur: AYACHE, Marc, 75002 Paris (FR); PASQUET, Thierry, 94300 Vincennes (FR)
(74) Mandataire: Brevalex
(86) Numéro de dépôt international: PCT/FR2020/050936
(87) Numéro de publication internationale: WO 2020/245534

(56) Documents cités:
- WO-A1-2011/108450
- WO-A1-2016/107885
- FR-A1- 3 031 058
- US-A1- 2010 084 230

## Description

### Domaine technique

L'invention se rapporte à un réducteur épicycloïdal, par exemple pour actionneur de frein de parking électrique de véhicule automobile.

### État de la technique antérieure

Un frein de parking électrique conventionnel à étrier flottant est présenté dans le document FR 3 031 058 A1 et sur la figure 1 du présent document.

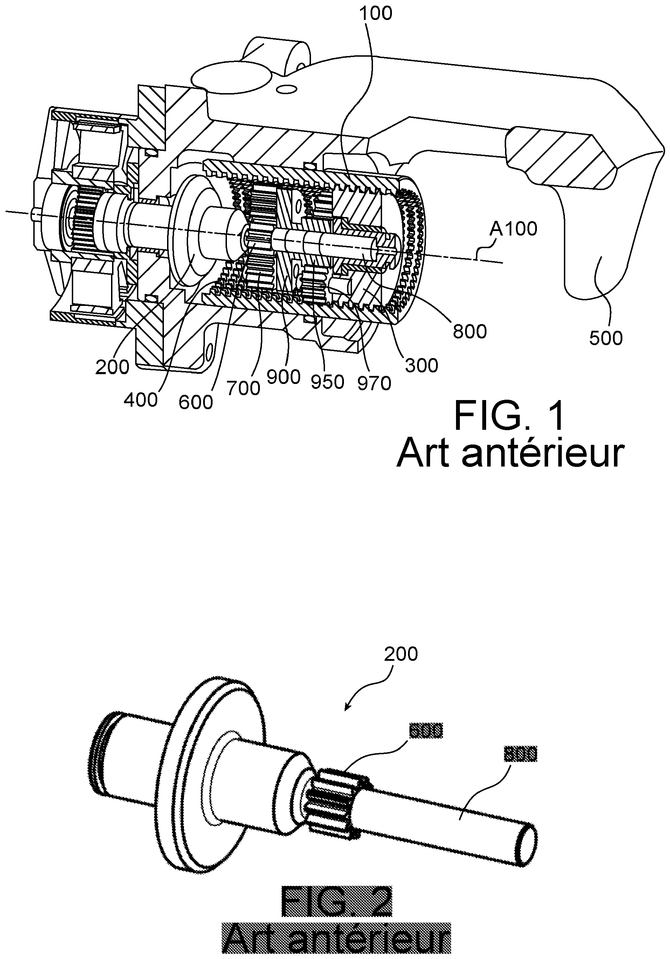

De manière connue en soi, le frein de la figure 1 comprend un réducteur épicycloïdal dont le planétaire extérieur forme un piston 100 mobile en translation selon un axe longitudinal A100. Un couple d'entrée généré par un moteur électrique est transmis à ce piston 100 par l'intermédiaire d'un arbre d'entraînement 200, représenté isolément à la figure 2, et de trains épicycloïdaux montés en série. Un porte-satellite de sortie 300 de ce réducteur comprend un filetage externe qui coopère avec un filetage interne formé par une denture interne 400 du piston 100 de manière à transformer la rotation du porte-satellite 300 en translation du piston 100 selon l'axe longitudinal A100, une telle translation permettant de plaquer des plaquettes contre un disque de frein par coopération avec des doigts 500 de l'étrier disposés en regard du piston 100.

Dans ce réducteur conventionnel, l'arbre d'entraînement 200 porte un pignon planétaire 600 qui engrène avec des pignons satellites 700 d'un premier train. Le porte-satellite 900 de ce premier train porte un pignon planétaire 950 qui engrène avec des pignons satellites 970 d'un deuxième train. L'arbre d'entraînement 200 comprend une partie aval 800 traversant une ouverture du porte-satellite 900 et du pignon planétaire 950 de sorte qu'une extrémité de cette partie aval 800 soit logée dans une cavité du porte-satellite de sortie 300 en autorisant une rotation de l'arbre 200 par rapport aux porte-satellites 300 et 900 et par rapport au pignon planétaire 950.

Dans cette configuration, l'application d'efforts mécaniques sur le piston 100 lors du freinage entraîne une reprise de ces efforts par l'arbre d'entraînement 200, ce qui peut entraîner un flambage de cet arbre 200.

### Exposé de l'invention

Un but de l'invention est de limiter le risque de flambage de l'arbre d'entraînement d'un tel réducteur épicycloïdal, notamment afin de permettre une réduction de son diamètre.

Plus généralement, l'invention vise à réduire la masse et le coût d'un tel réducteur épicycloïdal.

A cet effet, l'invention a pour objet un réducteur épicycloïdal, ce réducteur comprenant :
- un arbre d'entraînement apte à être entraîné par un moteur en rotation autour d'un axe longitudinal, cet arbre d'entraînement comportant un pignon planétaire intérieur ayant pour axe de rotation ledit axe longitudinal,
- un planétaire extérieur pourvu d'une denture interne formant un filetage interne, ce planétaire extérieur étant fixe en rotation autour de l'axe longitudinal,
- un engrenage comportant un ou plusieurs porte-satellites et un ou plusieurs pignons satellites portés par ce ou ces porte-satellites,
- un cylindre configuré pour être entraîné en rotation autour de l'axe longitudinal par ledit engrenage lors de la rotation de l'arbre d'entraînement autour de cet axe longitudinal, ce cylindre comprenant un filetage externe coopérant avec le filetage interne du planétaire extérieur de sorte que la rotation de ce cylindre autour de l'axe longitudinal entraîne le planétaire extérieur en translation selon cet axe longitudinal.

Selon l'invention, l'arbre d'entraînement comporte un épaulement formant une couronne d'appui radialement à l'extérieur du pignon planétaire intérieur, et le réducteur comprend au moins une pièce de transmission d'effort axial interposée entre cette couronne d'appui et le cylindre de manière à transmettre des efforts axiaux exercés sur l'un parmi la couronne d'appui et le cylindre à l'autre parmi cette couronne d'appui et ce cylindre.

L'au moins une pièce de transmission permet de reprendre les efforts axiaux exercés auxquels est soumis le réducteur, par exemple lors du freinage lorsque le réducteur appartient à un actionneur de frein, de manière à soulager l'arbre d'entraînement.

L'invention permet ainsi de réduire la masse et le coût de ce réducteur, par rapport à un réducteur conventionnel, en particulier en réduisant le diamètre des parties de l'arbre d'entraînement qui sont adjacentes à la couronne d'appui de cet arbre.

Dans un mode de réalisation, l'au moins une pièce de transmission d'effort axial peut être en appui d'une part contre ladite couronne d'appui, de préférence par l'intermédiaire d'une rondelle de friction, et d'autre part contre l'un parmi le ou les porte-satellites de l'engrenage.

Dans un mode de réalisation, l'au moins une pièce de transmission d'effort axial peut comprendre une ou plusieurs ouvertures radiales, chacune de ces ouvertures radiales formant un logement pour un pignon satellite respectif de l'engrenage.

Dans un mode de réalisation, l'au moins une pièce de transmission d'effort axial peut comprendre des bras définissant entre eux lesdites ouvertures radiales.

Dans un mode de réalisation, l'engrenage peut comprendre un premier et un deuxième porte-satellite, le réducteur comprenant une première pièce de transmission d'effort axial interposée entre la couronne d'appui et le premier porte-satellite de manière à transmettre des efforts axiaux exercés sur l'un parmi la couronne d'appui et le premier porte-satellite à l'autre parmi cette couronne d'appui et ce premier porte-satellite, le deuxième porte-satellite formant une deuxième pièce de transmission d'effort axial interposée entre le premier porte-satellite et le cylindre de manière à transmettre des efforts axiaux exercés sur l'un parmi le premier porte-satellite et le cylindre à l'autre parmi ce premier porte-satellite et ce cylindre.

Dans un mode de réalisation, le réducteur peut comprendre une couronne dentée solidaire du planétaire extérieur en rotation autour de l'axe longitudinal, et le deuxième porte-satellite peut former une cage libre portant des pignons satellites qui engrènent à la fois avec une denture interne de la couronne dentée et avec une denture interne du cylindre, la denture interne de la couronne dentée comprenant un nombre de dents différent du nombre de dents de la denture interne du cylindre.

Dans un mode de réalisation, ladite deuxième pièce de transmission d'effort axial peut être en appui d'une part contre le premier porte-satellite, de préférence par l'intermédiaire d'une rondelle de friction, et d'autre part contre une face d'appui du cylindre, de préférence par l'intermédiaire d'une rondelle de friction.

L'invention a aussi pour objet un actionneur de frein électrique, cet actionneur comprenant un réducteur tel que défini ci-dessus et un moteur électrique configuré pour entraîner ledit arbre d'entraînement en rotation autour dudit axe longitudinal.

L'invention a aussi pour objet un frein à disque, de préférence à étrier flottant, tel qu'un frein de parking ou un frein de service, ce frein comprenant un actionneur tel que défini ci-dessus.

L'invention a aussi pour objet un véhicule automobile, comprenant un frein à disque tel que défini ci-dessus.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique partielle en perspective, en coupe longitudinale, d'un frein de parking électrique comprenant un réducteur épicycloïdal de type connu ;
[Fig. 2] est une vue schématique en perspective d'un arbre d'entraînement du réducteur du frein de la figure 1 ;
[Fig. 3] est une schématique partielle en coupe longitudinale d'un réducteur épicycloïdal conforme à l'invention ;
[Fig. 4] est une vue schématique en perspective d'une pièce de transmission d'effort axial du réducteur de la figure 3 ;
[Fig. 5] est une vue schématique en perspective et en éclaté d'une partie du réducteur de la figure 3.

### Description détaillée de modes de réalisation

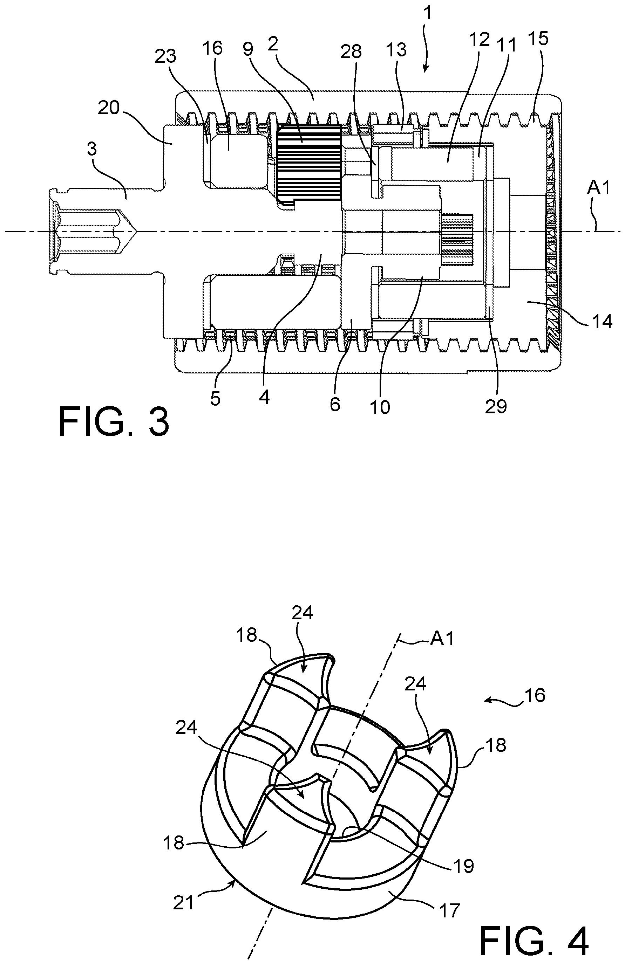

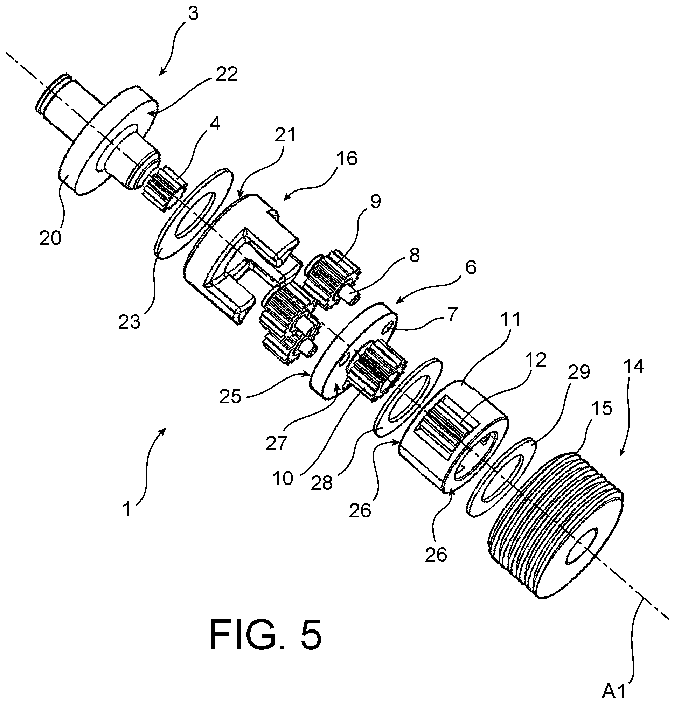

Les figures 3 et 5 montrent un réducteur épicycloïdal 1 selon l'invention. Ce réducteur 1 peut être mis en oeuvre dans le domaine automobile, par exemple au sein d'un frein électrique équipant un frein à disque, notamment du type à étrier flottant, ou plus généralement dans un actionneur électromécanique destiné à transformer un mouvement de rotation en un mouvement de translation.

En référence à la figure 3, le réducteur 1 comprend un planétaire extérieur 2 formant un piston mobile en translation selon un axe longitudinal A1. Ce piston 2 est immobilisé en rotation autour de cet axe longitudinal A1 par tout moyen conventionnel, par exemple par insertion de pions - appartenant par exemple à un étrier de frein - dans des encoches correspondantes réalisées dans le piston 2.

Le déplacement du piston 2 en translation selon l'axe longitudinal A1 est généré par un moteur électrique (non représenté) qui transmet un couple d'entrée à un arbre d'entraînement 3 du réducteur 1. Le mouvement de rotation de cet arbre 3 autour de l'axe A1 est transformé en mouvement de translation du piston 2 via un engrenage et un organe de transformation de mouvement tels que décrits ci-après.

Plus précisément, l'arbre d'entraînement 3 est dans cet exemple prévu pour être relié à un moteur électrique de manière à être entraîné en rotation autour de l'axe A1 lorsque un arbre du moteur tourne autour de cet axe A1.

L'arbre d'entraînement 3 est pourvu d'un premier pignon planétaire intérieur 4 qui est solidaire de cet arbre 3 en rotation autour de l'axe A1. Dans cet exemple, le planétaire 4 est formé d'une seule pièce avec l'arbre 3.

Le planétaire extérieur 2 comprend une denture interne 5 formant d'une part des rainures longitudinales circonférentiellement espacées les unes des autres pour engrener avec des pignons satellites et, d'autre part, un filetage interne configuré pour coopérer avec un filetage externe dudit organe de transformation de mouvement (voir ci-après).

Le réducteur 1 comprend un premier porte-satellite 6 ayant trois ouvertures 7 excentrées par rapport à l'axe A1 à 120°, chacune de ces ouvertures 7 recevant un tourillon 8 portant un pignon satellite 9 respectif de manière à assurer un guidage en rotation de ce pignon satellite 9 (voir figure 5).

Les pignons satellites 9 engrènent à la fois avec le premier pignon planétaire intérieur 4 et avec lesdites rainures longitudinales formées par la denture interne 5 du planétaire extérieur 2 de sorte qu'une rotation autour de l'axe A1 de l'arbre 3 et donc du planétaire 4 entraîne chaque pignon satellite 9 d'une part en rotation autour de son tourillon 8 et d'autre part le long d'une trajectoire circonférentielle autour de l'axe A1, entraînant par suite le premier porte-satellite 6 en rotation autour de l'axe A1.

Le réducteur 1 permet ainsi d'entraîner le premier porte-satellite 6 en rotation autour de l'axe longitudinal A1 à une vitesse de rotation inférieure à la vitesse de rotation de l'arbre d'entraînement 3.

Dans l'exemple des figures 3 et 5, le réducteur 1 comprend un deuxième étage de réduction dont l'entrée est constituée par un deuxième pignon planétaire intérieur 10 porté par le premier porte-satellite 6, ce planétaire 10 étant solidaire du porte-satellite 6 en rotation autour de l'axe A1. Dans cet exemple, le planétaire 10 est formé d'une seule pièce avec le porte-satellite 6.

Le réducteur 1 des figures 3 et 5 comprend un deuxième porte-satellite 11 formant une cage libre portant dans cet exemple trois pignons satellites 12. De manière connue en soi, la cage 11 présente une forme sensiblement tubulaire et est pourvue d'ouvertures radiales qui s'étendent chacune sur une portion axiale centrale de sorte que chaque ouverture radiale soit axialement délimitée, de part et d'autre, par une portion d'extrémité axiale respective de la cage. Chacune de ces ouvertures radiales forme un logement pour l'un des satellites 12. Pour porter les satellites 12 et assurer leur guidage en rotation, chaque ouverture est axialement traversée par un arbre respectif qui est relié à la cage en étant reçu dans un orifice correspondant de chacune des portions d'extrémité axiale de la cage.

En référence à la figure 3, le réducteur 1 comprend une couronne dentée 13 comprenant des dents externes et des dents internes, les dents externes étant engagées dans lesdites rainures longitudinales formées par la denture interne 5 du planétaire extérieur 2 de sorte que la couronne 13 et le planétaire extérieur 2 soient solidaires l'un de l'autre en rotation autour de l'axe A1. Les dents internes de la couronne 13 sont configurées pour engrener avec les pignons satellites 12 en définissant des points de contact situés radialement à l'intérieur par rapport à la denture interne 5 du planétaire extérieur 2. Autrement dit, les dents internes de la couronne 13 sont configurées pour décaler radialement vers l'intérieur du réducteur 1 les rainures longitudinales formées par la denture interne 5 du planétaire extérieur 2.

Dans cet exemple, ce décalage radial est rendu nécessaire par le fait que les pignons satellites 12 engrènent également avec des dents formées dans une cavité de l'organe de transformation de mouvement 14, cette cavité ayant une dimension radiale inférieure à la dimension radiale intérieure du planétaire extérieur 2 (voir figure 3, et ci-après).

L'organe de transformation de mouvement 14 prend dans cet exemple la forme d'un cylindre comprenant un filetage externe 15 qui coopère avec le filetage interne formé par la denture interne 5 du planétaire extérieur 2. Il résulte de cette coopération qu'un déplacement du cylindre 14 en rotation autour de l'axe A1 entraîne un déplacement du planétaire extérieur 2 en translation selon l'axe A1. Le cylindre 14 et le piston 2 forment ainsi un système vis-écrou réversible.

Ladite cavité du cylindre 14 est configurée pour recevoir une partie de la cage 11 de sorte que les pignons satellites 12 engrènent par une première partie axiale de ceux-ci avec les dents formées dans cette cavité.

La couronne dentée 13 est axialement adjacente au cylindre 14 de sorte que les pignons satellites 12 engrènent par une deuxième partie axiale de ceux-ci avec les dents internes de la couronne 13.

Grâce à une telle configuration, la rotation du planétaire 10 autour de l'axe A1 entraîne chaque pignon satellite 12 d'une part en rotation autour de son axe de rotation propre et d'autre part le long d'une trajectoire circonférentielle autour de l'axe A1, entraînant par suite la cage libre 11 en rotation autour de l'axe A1.

Si le nombre de dents internes de la couronne dentée 13 était identique au nombre de dents formées dans la cavité du cylindre 14, la rotation du planétaire 10 autour de l'axe A1 n'entrainerait pas le cylindre 14 en rotation autour de cet axe A1. En effet, les dents du cylindre 14 seraient dans ce cas axialement alignées avec les dents internes de la couronne 13 de sorte que les pignons satellites 12 se contenteraient de rouler dans la denture du cylindre 14 lors de leur rotation.

Dans cet exemple, la couronne dentée 13 présente par conséquent un nombre de dents internes inférieur au nombre de dents formées dans la cavité du cylindre 14, ce qui permet d'obtenir un taux de réduction de vitesse relativement important.

Le réducteur 1 permet ainsi d'entraîner le cylindre 14 en rotation autour de l'axe longitudinal A1 à une vitesse de rotation inférieure à la vitesse de rotation du pignon planétaire 10 et a fortiori de l'arbre d'entraînement 3.

Le réducteur 1 réduit ainsi la vitesse de rotation en augmentant le couple.

L'invention permet de reprendre les efforts axiaux appliqués dans ce réducteur 1, par exemple lorsque le piston 2 exerce un effort de freinage.

A cet effet, le réducteur 1 comprend une pièce de transmission d'effort 16 telle que représentée à la figure 4.

Dans cet exemple, la pièce 16 présente une forme sensiblement tubulaire définissant une ouverture centrale 19 dimensionnée pour être traversée par l'arbre d'entraînement 3 et permettre une rotation relative de l'arbre 3 par rapport à cette pièce 16.

Dans ce mode de réalisation, la pièce de transmission d'effort 16 comprend une première partie 17 circonférentiellement pleine sous forme d'anneau, et une deuxième partie comportant trois bras 18 s'étendant axialement et définissant entre eux des ouvertures radiales formant chacune un logement pour un pignon satellite 9 respectif.

Pour assurer la reprise des efforts, l'arbre d'entraînement 3 comprend un épaulement 20 formant une couronne d'appui radialement à l'extérieur du pignon planétaire intérieur 4.

La pièce 16 est interposée entre cette couronne d'appui formée par l'épaulement 20 de l'arbre 3 et le porte-satellite 6 de manière à transmettre des efforts axiaux exercés sur le porte-satellite 6 à la couronne d'appui 20, ou de la couronne d'appui 20 au porte-satellite 6, en évitant que ces efforts axiaux ne transitent par la partie radialement centrale de l'arbre 3, en particulier la partie de l'arbre 3 située axialement de part et d'autre de l'épaulement 20. Il en résulte une limitation significative voire une annulation du risque de flambage de l'arbre d'entraînement 3 lors de l'utilisation du réducteur 1.

Plus précisément, ladite première partie 17 de la pièce de transmission d'effort 16 forme une face d'appui 21 venant en appui contre une face d'appui 22 formée par la couronne d'appui 20, par l'intermédiaire d'une rondelle de friction 23. Les bras axiaux 18 de la pièce de transmission d'effort 16 définissent quant à eux une face d'appui 24 venant en appui contre une face d'appui 25 du porte-satellite 6.

La rondelle de friction 23 permet de limiter l'usure de la couronne d'appui 20 et de la pièce de transmission d'effort 16 lors de la rotation relative de ces pièces l'une par rapport à l'autre.

Par ailleurs, lesdites portions d'extrémité axiale de la cage libre 11 forment chacune une face d'appui 26, l'une venant en appui contre une face d'appui 27 du porte-satellite 6, par l'intermédiaire d'une rondelle de friction 28, l'autre venant en appui contre une face d'appui formée par le fond de ladite cavité du cylindre 14, par l'intermédiaire d'une rondelle de friction 29.

La cage libre 11, interposée entre le porte-satellite 6 et le cylindre 14, forme ainsi une deuxième pièce de transmission d'effort axial permettant de transmettre au porte-satellite 6 des efforts axiaux exercés sur le cylindre 14, ou réciproquement de transmettre au cylindre 14 des efforts axiaux exercés sur le porte-satellite 6.

Les rondelles de friction 28 et 29 permettent de limiter l'usure du porte-satellite 6, de la cage libre 11 et de l'organe 14 lors de la rotation relative de ces pièces l'une par rapport aux autres.

Le mode de réalisation de la figure 3 permet ainsi de transmettre des efforts axiaux exercés sur le cylindre 14 - par exemple lorsque le piston 2 est soumis à un effort de freinage - à la couronne d'appui 20 par l'intermédiaire de deux pièces de transmission d'effort axial 11 et 16 interposées entre la couronne d'appui 20 et le cylindre 14, tout en évitant que le chemin de ces efforts axiaux ne passe par l'axe longitudinal A1 et donc par les parties de l'arbre d'entraînement 3 de diamètre relativement faible au regard du diamètre de son épaulement 20. Cette fonction de transmission d'effort par chemin d'efforts excentré est également assurée dans l'autre sens, c'est-à-dire lorsque des efforts axiaux sont appliqués sur la couronne d'appui 20. Dans ce dernier cas, les deux pièces de transmission d'effort axial 11 et 16 permettent de transmettre au cylindre 14 des efforts axiaux appliqués sur le couronne d'appui 20.

La description qui précède est donnée à titre d'exemple et n'est aucunement limitative. Par exemple, dans des modes de réalisation non représentés, le réducteur 1 peut comprendre un unique étage de réduction. Dans ce cas, le porte-satellite 6 ne comprend pas le deuxième pignon planétaire intérieur 10 et est directement relié au cylindre 14 de sorte que le cylindre 14 et le porte-satellite 6 soient solidaires l'un de l'autre en rotation autour de l'axe A1. Bien entendu, le réducteur 1 ne comprend pas dans un tel mode de réalisation à un étage de réduction la cage libre 11, les satellites 12 et les rondelles de friction 28 et 29.

Dans un autre exemple de réalisation non représenté, le réducteur 1 comprend un deuxième étage de réduction différent de celui donné en exemple à la figure 3. Par exemple, les satellites 12 sont portés non pas par la cage libre 11 mais directement par l'organe 14. Pour assurer la reprise des efforts axiaux entre le porte-satellite 6 et cet organe 14, le réducteur 1 peut dans ce cas comprendre une pièce supplémentaire de transmission d'effort axial similaire à la pièce 16 et interposée entre le porte-satellite 6 et l'organe 14.

### Nomenclature

- A100: axe longitudinal
- 100: planétaire extérieur / piston
- 200: arbre d'entraînement
- 300: porte-satellite de sortie
- 400: denture interne du planétaire extérieur
- 500: doigts d'étrier
- 600: pignon planétaire
- 700: pignons satellites
- 800: partie aval de l'arbre d'entraînement
- 900: porte-satellite de premier train
- A1: axe longitudinal
- 1: réducteur épicycloïdal
- 2: planétaire extérieur / piston
- 3: arbre d'entraînement
- 4: premier pignon planétaire intérieur
- 5: denture interne du planétaire extérieur
- 6: premier porte-satellite
- 7: ouvertures pour tourillons du premier porte-satellite
- 8: tourillons du premier porte-satellite
- 9: pignons satellites du premier porte-satellite
- 10: deuxième pignon planétaire intérieur
- 11: deuxième porte-satellite / cage libre / deuxième pièce de transmission d'effort axial
- 12: pignons satellites du deuxième porte-satellite
- 13: couronne dentée
- 14: cylindre / organe de transformation de mouvement / vis
- 15: filetage externe du cylindre
- 16: (première) pièce de transmission d'effort axial
- 17: première partie / partie pleine de la pièce de transmission d'effort axial
- 18: deuxième partie / bras de la pièce de transmission d'effort axial
- 19: ouverture centrale de la pièce de transmission d'effort axial
- 20: épaulement / couronne d'appui de l'arbre d'entraînement
- 21: face d'appui de la pièce de transmission d'effort axial
- 22: face d'appui de la couronne d'appui
- 23: rondelle de friction
- 24: face d'appui de la pièce de transmission d'effort axial
- 25: face d'appui du premier porte-satellite
- 26: faces d'appui du deuxième porte-satellite
- 27: face d'appui du premier porte-satellite
- 28: rondelle de friction
- 29: rondelle de friction

## Revendications

1. Réducteur épicycloïdal (1), ce réducteur (1) comprenant :
- un arbre d'entraînement (3) apte à être entraîné par un moteur en rotation autour d'un axe longitudinal (A1), cet arbre d'entraînement (3) comportant un pignon planétaire intérieur (4) ayant pour axe de rotation ledit axe longitudinal (A1),
- un planétaire extérieur (2) pourvu d'une denture interne (5) formant un filetage interne, ce planétaire extérieur (2) étant fixe en rotation autour de l'axe longitudinal (A1),
- un engrenage comportant un ou plusieurs porte-satellites (6, 11) et un ou plusieurs pignons satellites (9, 12) portés par ce ou ces porte-satellites (6, 11),
- un cylindre (14) configuré pour être entraîné en rotation autour de l'axe longitudinal (A1) par ledit engrenage lors de la rotation de l'arbre d'entraînement (3) autour de cet axe longitudinal (A1), ce cylindre (14) comprenant un filetage externe (15) coopérant avec le filetage interne du planétaire extérieur (2) de sorte que la rotation de ce cylindre (14) autour de l'axe longitudinal (A1) entraîne le planétaire extérieur (2) en translation selon cet axe longitudinal (A1),
- l'arbre d'entraînement (3) comporte un épaulement (20) formant une couronne d'appui radialement à l'extérieur du pignon planétaire intérieur (4), **caractérisé en ce que** le réducteur (1) comprend au moins une pièce de transmission d'effort axial (16) interposée entre cette couronne d'appui (20) et le cylindre (14) de manière à transmettre des efforts axiaux exercés sur l'un parmi la couronne d'appui (20) et le cylindre (14) à l'autre parmi cette couronne d'appui (20) et ce cylindre (14).

2. Réducteur (1) selon la revendication 1, dans lequel l'au moins une pièce de transmission d'effort axial (16) est en appui d'une part contre ladite couronne d'appui (20), de préférence par l'intermédiaire d'une rondelle de friction (23), et d'autre part contre l'un (6) parmi le ou les porte-satellites de l'engrenage.

3. Réducteur (1) selon la revendication 1 ou 2, dans lequel l'au moins une pièce de transmission d'effort axial (16) comprend une ou plusieurs ouvertures radiales, chacune de ces ouvertures radiales formant un logement pour un pignon satellite (9) respectif de l'engrenage.

4. Réducteur (1) selon la revendication3, dans lequel l'au moins une pièce de transmission d'effort axial (16) comprend des bras (18) définissant entre eux lesdites ouvertures radiales.

5. Réducteur (1) selon l'une quelconque des revendications 1 à 4, dans lequel l'engrenage comprend un premier (6) et un deuxième porte-satellite (11), le réducteur (1) comprenant une première pièce de transmission d'effort axial (16) interposée entre la couronne d'appui (20) et le premier porte-satellite (6) de manière à transmettre des efforts axiaux exercés sur l'un parmi la couronne d'appui (20) et le premier porte-satellite (6) à l'autre parmi cette couronne d'appui (20) et ce premier porte-satellite (6), le deuxième porte-satellite (11) formant une deuxième pièce de transmission d'effort axial interposée entre le premier porte-satellite (6) et le cylindre (14) de manière à transmettre des efforts axiaux exercés sur l'un parmi le premier porte-satellite (6) et le cylindre (14) à l'autre parmi ce premier porte-satellite (6) et ce cylindre (14).

6. Réducteur (1) selon la revendication 5, comprenant une couronne dentée (13) solidaire du planétaire extérieur (2) en rotation autour de l'axe longitudinal (A1), et dans lequel le deuxième porte-satellite (11) forme une cage libre portant des pignons satellites (12) qui engrènent à la fois avec une denture interne de la couronne dentée (13) et avec une denture interne du cylindre (14), la denture interne de la couronne dentée (13) comprenant un nombre de dents différent du nombre de dents de la denture interne du cylindre (14).

7. Réducteur (1) selon la revendication 5 ou 6, dans lequel ladite deuxième pièce de transmission d'effort axial (11) est en appui d'une part contre le premier porte-satellite (6), de préférence par l'intermédiaire d'une rondelle de friction (28), et d'autre part contre une face d'appui du cylindre (14), de préférence par l'intermédiaire d'une rondelle de friction (29).

8. Actionneur de frein électrique, comprenant un réducteur (1) selon l'une quelconque des revendications 1 à 7 et un moteur électrique configuré pour entraîner ledit arbre d'entraînement (3) en rotation autour dudit axe longitudinal (A1).

9. Frein à disque, de préférence à étrier flottant, comprenant un actionneur selon la revendication 8.

10. Véhicule automobile, comprenant un frein à disque selon la revendication 9.

## Patentansprüche

1. Planetenuntersetzungsgetriebe (1), wobei dieses Untersetzungsgetriebe (1) umfasst:
- eine Antriebswelle (3), die von einem Motor um eine Längsachse (A1) drehend antreibbar ist, wobei diese Antriebswelle (3) ein Sonnenrad (4) aufweist, dessen Drehachse die Längsachse (A1) ist,
- ein Hohlrad (2), das mit einer Innenverzahnung (5) versehen ist, die ein Innengewinde bildet, wobei dieses Hohlrad (2) drehfest bezüglich der Längsachse (A1) ist,
- ein Räderwerk, das einen oder mehrere Planetenradträger (6, 11) und ein oder mehrere Planetenräder (9, 12), die von diesem oder diesen Planetenradträgern (6, 11) getragen werden, aufweist,
- einen Zylinder (14), der dafür ausgelegt ist, von dem Räderwerk um die Längsachse (A1) während der Drehung der Antriebswelle (3) um diese Längsachse (A1) drehend angetrieben zu werden, wobei dieser Zylinder (14) ein Außengewinde (15) umfasst, das mit dem Innengewinde des Hohlrades (2) so zusammenwirkt, dass die Drehung dieses Zylinders (14) um die Längsachse (A1) das Hohlrad (2) translatorisch entlang dieser Längsachse (A1) antreibt,
- wobei die Antriebswelle (3) eine Schulter (20) aufweist, die einen Stützring radial außerhalb des Sonnenrades (4) bildet,
**dadurch gekennzeichnet, dass** das Untersetzungsgetriebe (1) mindestens ein Teil zur Axialkraftübertragung (16) umfasst, das zwischen diesem Stützring (20) und dem Zylinder (14) angeordnet ist, um axiale Kräfte, die auf eines von dem Stützring (20) und dem Zylinder (14) ausgeübt werden, auf das andere von diesem Stützring (20) und diesem Zylinder (14) zu übertragen.

2. Untersetzungsgetriebe (1) nach Anspruch 1, wobei das mindestens eine Teil zur Axialkraftübertragung (16) einerseits an dem Stützring (20) anliegt, vorzugsweise über eine Reibscheibe (23), und andererseits an einem (6) von dem oder den Planetenradträgern des Räderwerks.

3. Untersetzungsgetriebe (1) nach Anspruch 1 oder 2, wobei das mindestens eine Teil zur Axialkraftübertragung (16) eine oder mehrere radiale Öffnungen umfasst, wobei jede dieser radialen Öffnungen eine Aufnahme für ein jeweiliges Planetenrad (9) des Räderwerks bildet.

4. Untersetzungsgetriebe (1) nach Anspruch 3, wobei das mindestens eine Teil zur Axialkraftübertragung (16) Arme (18) umfasst, die zwischen sich die radialen Öffnungen definieren.

5. Untersetzungsgetriebe (1) nach einem der Ansprüche 1 bis 4, wobei das Räderwerk einen ersten (6) und einen zweiten Planetenradträger (11) umfasst, wobei das Untersetzungsgetriebe (1) ein erstes Teil zur Axialkraftübertragung (16) umfasst, das zwischen dem Stützring (20) und dem ersten Planetenradträger (6) angeordnet ist, um axiale Kräfte, die auf eines von dem Stützring (20) und dem ersten Planetenradträger (6) ausgeübt werden, auf das andere von diesem Stützring (20) und diesem ersten Planetenradträger (6) zu übertragen, wobei der zweite Planetenradträger (11) ein zweites Teil zur Axialkraftübertragung bildet, das zwischen dem ersten Planetenradträger (6) und dem Zylinder (14) angeordnet ist, um axiale Kräfte, die auf eines von dem ersten Planetenradträger (6) und dem Zylinder (14) ausgeübt werden, auf das andere von diesem ersten Planetenradträger (6) und diesem Zylinder (14) zu übertragen.

6. Untersetzungsgetriebe (1) nach Anspruch 5, welches einen Zahnkranz (13) umfasst, der mit dem Hohlrad (2) drehfest bezüglich der Längsachse (A1) verbunden ist, und wobei der zweite Planetenradträger (11) einen freien Käfig bildet, der Planetenräder (12) trägt, welche gleichzeitig mit einer Innenverzahnung des Zahnkranzes (13) und mit einer Innenverzahnung des Zylinders (14) kämmen, wobei die Innenverzahnung des Zahnkranzes (13) eine Anzahl von Zähnen umfasst, die von der Anzahl von Zähnen der Innenverzahnung des Zylinders (14) verschieden ist.

7. Untersetzungsgetriebe (1) nach Anspruch 5 oder 6, wobei das zweite Teil zur Axialkraftübertragung (11) einerseits an dem ersten Planetenradträger (6) anliegt, vorzugsweise über eine Reibscheibe (28), und andererseits an einer Anlagefläche des Zylinders (14), vorzugsweise über eine Reibscheibe (29).

8. Elektrischer Bremsaktuator, welcher ein Untersetzungsgetriebe (1) nach einem der Ansprüche 1 bis 7 und einen Elektromotor, der dafür ausgelegt ist, die Antriebswelle (3) um die Längsachse (A1) drehend anzutreiben, umfasst.

9. Scheibenbremse, vorzugsweise mit Schwimmsattel, welche einen Aktuator nach Anspruch 8 umfasst.

10. Kraftfahrzeug, welches eine Scheibenbremse nach Anspruch 9 umfasst.

## Claims

1. An epicyclic reduction gear (1), said reduction gear (1) comprising:
- a drive shaft (3) capable of being rotatably driven by a motor about a longitudinal axis (A1), this drive shaft (3) comprising an internal sun gear (4) having said longitudinal axis (A1) as its axis of rotation,
- an external sun gear (2) provided with an internal toothing (5) forming an internal thread, this external sun gear (2) being rotatably fixed about the longitudinal axis (A1),
- a gear comprising one or more planet carriers (6, 11) and one or more planet gears (9, 12) carried by this or these planet carriers (6, 11),
- a cylinder (14) configured to be rotatably driven about the longitudinal axis (A1) by said gear during rotation of the drive shaft (3) about this longitudinal axis (A1), this cylinder (14) comprising an external thread (15) cooperating with the internal thread of the external sun gear (2) so that rotation of this cylinder (14) about the longitudinal axis (A1) translationally drives the external sun gear (2) along this longitudinal axis (A1),
wherein the drive shaft (3) comprises a shoulder (20) forming a bearing ring radially outwardly of the internal sun gear (4), and **characterized in that** the reduction gear (1) comprises at least one axial force transmission piece (16) interposed between this bearing ring (20) and the cylinder (14) so as to transmit axial forces exerted on one of the bearing ring (20) and the cylinder (14) to the other of this bearing ring (20) and this cylinder (14).

2. The reduction gear (1) according to claim 1, wherein the at least one axial force transmission piece (16) bears on the one hand against said bearing ring (20), preferably through a friction washer (23), and on the other hand against one (6) of the planet carrier(s) of the gear.

3. The reduction gear (1) according to claim 1 or 2, wherein the at least one axial force transmission piece (16) comprises one or more radial openings, each of these radial openings forming a housing for a respective planet gear (9) of the gear.

4. The reduction gear (1) according to claim 3, wherein the at least one axial force transmission piece (16) comprises arms (18) defining said radial openings therebetween.

5. The reduction gear (1) according to any of claims 1 to 4, wherein the gear comprises a first (6) and a second (11) planet carrier, the reduction gear (1) comprising a first axial force transmission piece (16) interposed between the bearing ring (20) and the first planet carrier (6) so as to transmit axial forces exerted on one of the bearing ring (20) and the first carrier (6) to the other of this bearing ring (20) and this first planet carrier (6), the second planet carrier (11) forming a second axial force transmission piece interposed between the first planet carrier (6) and the cylinder (14) so as to transmit axial forces exerted on one of the first planet carrier (6) and the cylinder (14) to the other of this first planet carrier (6) and this cylinder (14).

6. The reduction gear (1) according to claim 5, comprising a ring gear (13) rotatably integral with the external sun gear (2) about the longitudinal axis (A1), and wherein the second planet carrier (11) forms a free cage carrying planet gears (12) which mesh both with an internal toothing of the ring gear (13) and with an internal toothing of the cylinder (14), the internal toothing of the ring gear (13) comprising a number of teeth different from the number of teeth of the internal toothing of the cylinder (14).

7. The reduction gear (1) according to claim 5 or 6, wherein said second axial force transmission piece (11) bears on the one hand against the first planet carrier (6), preferably through a friction washer (28), and on the other hand against a bearing face of the cylinder (14), preferably through a friction washer (29).

8. An electric brake actuator, comprising a reduction gear (1) according to any of claims 1 to 7 and an electric motor configured to rotatably drive said drive shaft (3) about said longitudinal axis (A1).

9. A disc brake, preferably a floating caliper brake, comprising an actuator according to claim 8.

10. An automobile vehicle, comprising a disc brake according to claim 9.
